(19) Europäisches Patentamt
European Patent Office
Office européen des brevets

(11) **EP 3 267 577 B1**

(12) **EUROPEAN PATENT SPECIFICATION**

(45) Date of publication and mention
of the grant of the patent:
**30.11.2022 Bulletin 2022/48**

(21) Application number: **16758694.0**

(22) Date of filing: **01.02.2016**

(51) International Patent Classification (IPC):
*H02P 23/08* (2006.01)   *H02P 21/12* (2016.01)
*H02P 21/26* (2016.01)   *H02P 21/09* (2016.01)

(52) Cooperative Patent Classification (CPC):
**H02P 21/26; H02P 21/09;** H02P 2207/01

(86) International application number:
**PCT/JP2016/052850**

(87) International publication number:
**WO 2016/139998 (09.09.2016 Gazette 2016/36)**

(54) **POWER CONVERSION DEVICE AND METHOD FOR CONTROLLING SAME**

STROMWANDLERVORRICHTUNG UND VERFAHREN ZUR STEUERUNG DAVON

DISPOSITIF DE CONVERSION DE PUISSANCE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2015 JP 2015043099**

(43) Date of publication of application:
**10.01.2018 Bulletin 2018/02**

(73) Proprietor: **Hitachi Industrial Equipment Systems
Co., Ltd.
Tokyo 101-0022 (JP)**

(72) Inventors:
• **TOBARI Kazuaki**
  **Tokyo 100-8280 (JP)**
• **IWAJI Yoshitaka**
  **Tokyo 100-8280 (JP)**
• **IBORI Satoshi**
  **Tokyo 101-0022 (JP)**
• **NAKAMURA Atsuhiko**
  **Tokyo 101-0022 (JP)**
• **TOMITA Hiroyuki**
  **Tokyo 101-0022 (JP)**
• **ONUMA Yusaku**
  **Tokyo 101-0022 (JP)**

• **SAKAI Toshifumi**
  **Tokyo 100-8280 (JP)**

(74) Representative: **Mewburn Ellis LLP
Aurora Building
Counterslip
Bristol BS1 6BX (GB)**

(56) References cited:
**EP-A1- 1 049 245      EP-A1- 1 835 612
EP-A2- 0 310 050      EP-A2- 2 173 027
WO-A1-2013/132750      JP-A- 2000 166 008
JP-A- 2000 312 496      JP-A- 2001 238 499
US-A- 4 266 176**

• **ISHIDA S ET AL: "Sensorless vector control with
quick response for general purpose inverters",
POWER CONVERSION CONFERENCE, 1993.
YOKOHAMA 1993., CONFERENCE RECORD O F
THE YOKOHAMA, JAPAN 19-21 APRIL 1993, NEW
YORK, NY, USA,IEEE, US, 19 April 1993
(1993-04-19), pages 467-472, XP032141763, DOI:
10.1109/PCCON.1993.264210 ISBN:
978-0-7803-0471-0**

**Description**

TECHNICAL FIELD

The present invention relates to a drive control of a power conversion device that drives an induction motor, and more particularly to a power conversion device that operates the induction motor with high accuracy during a regenerative operation.

BACKGROUND ART

As described in JP 08-317698 A, a technique is described in which, as a control method during the regenerative operation of the induction motor, a frequency or a voltage is corrected so that a q-axis secondary magnetic flux becomes a negative value during the regenerative operation, whereby a torque reduction due to magnetic flux change is prevented and a torque shortage is suppressed. ISHIDA S ET AL: "Sensorless Vector Control with Quick Response for General Purpose Inventors", POWER CONVERSION CONFERENCE, 1993. YOKOHAMA 1993., CONFERENCE RECORD OF THE YOKOHAMA, JAPAN 19-21 APRIL 1993, NEW YORK, NY, USA, IEEE, US, 19 April 1993, Pages 467 - 472 proposes a vector control method without using a speed sensor, and introduces a high stability flux control. EP 2 173 027 A2 proposes a control device including a slip calculator that calculates a first slip frequency and a current detector that detects motor current passing through an induction motor.

CITATION LIST

PATENT DOCUMENT

Patent Document 1: JP 8-317698 A

SUMMARY OF THE INVENTION

PROBLEMS TO BE SOLVED BY THE INVENTION

The method described in JP 08-317698 A, robustness is secured since the q-axis secondary magnetic flux is set to the negative value during the regenerative operation. However, since it deviates from an ideal state of vector control (q-axis secondary magnetic flux = 0), there is a problem that a control characteristic with respect to a speed command value deteriorates during the regenerative operation.

Accordingly, an object of the present invention is to provide a power converter that can realize stable and high-accuracy speed control characteristics even during the regenerative operation.

SOLUTIONS TO PROBLEMS

As an example of the present invention, there is provided a method for controlling a power conversion device according to claim 1, and a power conversion device according to claim 10.

EFFECTS OF THE INVENTION

According to the present invention, it is possible to provide stable and high-accuracy speed control characteristics even during the regenerative operation.

BRIEF DESCRIPTION OF THE DRAWINGS

Fig. 1 is a configuration diagram of a power conversion device according to an embodiment.
Fig. 2 shows load operating characteristics when conventional technology is used.
Fig. 3 is a configuration diagram of a frequency correction calculation unit according to an embodiment.
Fig. 4 is a configuration diagram of a correction calculation unit according to an embodiment.
Fig. 5 shows load operating characteristics according to an embodiment.
Fig. 6 is a configuration diagram of a correction calculation unit according to an embodiment.
Fig. 7 is a configuration diagram of a correction calculation unit according to an embodiment.

Fig. 8 is a configuration diagram of a correction calculation unit according to an embodiment.
Fig. 9 is a configuration diagram of a power converter according to an embodiment.
Fig. 10 is a configuration diagram of a frequency correction calculation unit according to an embodiment.
Fig. 11 is a configuration diagram of a power converter according to an embodiment.
Fig. 12 is a configuration diagram of a power converter according to an embodiment.
Fig. 13 is a configuration diagram of a power converter according to an embodiment.
Fig. 14 is a configuration diagram of a power converter according to an embodiment.
Fig. 15 is a configuration diagram of a power converter according to an embodiment.
Fig. 16 is a configuration diagram of a power converter according to an embodiment.

## MODE FOR CARRYING OUT THE INVENTION

Hereinafter, the present embodiment will be described in detail with reference to the drawings. The same reference numerals are attached to common configurations in each drawing. In addition, each embodiment described below is not limited to the illustrated examples.

<First embodiment>

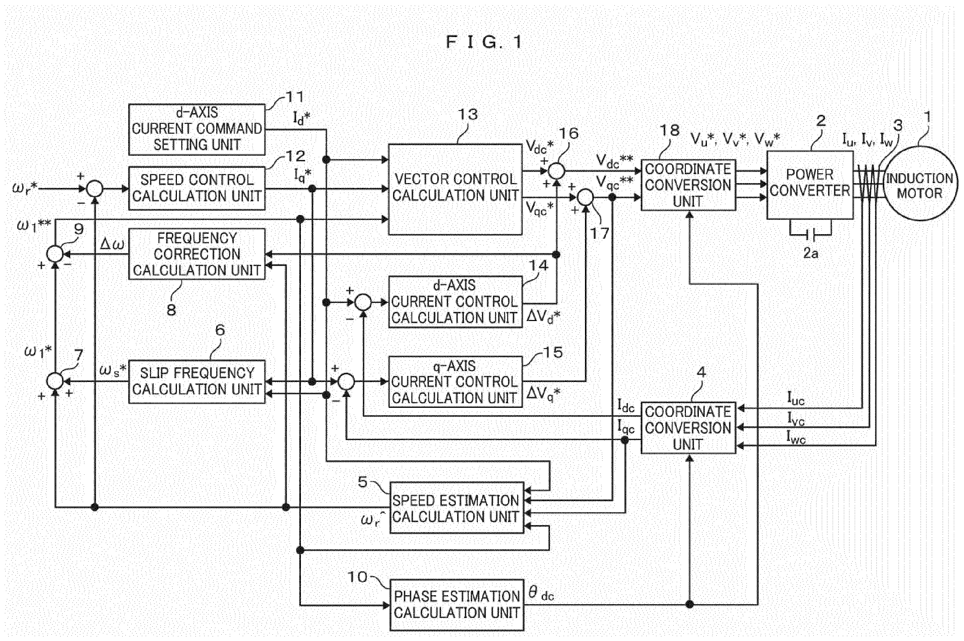

Fig. 1 shows a configuration diagram of a power conversion device according to an embodiment. An induction motor 1 generates a torque by a magnetic flux generated by a current of a magnetic flux axis (d axis) component and a current of a torque axis (q axis) component orthogonal to the magnetic flux axis. A power converter 2 outputs a voltage value proportional to voltage command values $V_u^*$, $V_v^*$, $V_w^*$ of a three-phase AC current, and varies an output voltage value and a rotational frequency value of the induction motor 1. A DC power supply 2a supplies a DC voltage to the power converter 2.

A current detector 3 outputs detection values $I_{uc}$, $I_{vc}$, $I_{wc}$ of three-phase AC currents $I_u$, $I_v$, $I_w$ of the induction motor 1. The current detector 3 detects line currents of two phases among three phases of the induction motor 1, for example, the U-phase and the W-phase, and a line current of the V-phase may be $I_v = - (I_u + I_w)$ obtained from an AC condition ($I_u + I_v + I_w = 0$). A coordinate transformation unit 4 outputs d-axis and q-axis current detection values $I_{dc}$ and $I_{qc}$ from the detection values $I_{uc}$, $I_{vc}$, $I_{wc}$ of the three-phase AC currents Iu, Iv, Iw and a phase estimation value $\theta_{dc}$.

A speed estimation calculation unit 5 outputs a speed estimation value $\omega_r^{\wedge}$ of the induction motor 1, based on a d-axis current command value $I_d^*$, a q-axis voltage command value $V_{qc}^{**}$, a q-axis current detection value $I_{qc}$, an output frequency value $\omega_1^{**}$ and an electric constant ($R_1$, $R_2'$, $M$, $L_2$, $\phi_{2d}^*$) of the induction motor 1. A slip frequency calculation unit 6 outputs a slip frequency command value $\omega_s^*$ of the induction motor 1 based on the d-axis and q-axis current command values $I_d^*$ and $I_q^*$ and a secondary time constant $T_2$ of the induction motor 1.

An addition unit 7 outputs an output frequency value $\omega_1^*$ which is an added value of the speed estimation value $\omega_r^{\wedge}$ and the slip frequency command value $\omega_s^*$. A frequency correction calculation unit 8 outputs a correction value $\Delta\omega$ of the output frequency value $\omega_1^*$ based on a d-axis voltage correction value $\Delta V_d^*$ and the speed estimation value $\omega_r^{\wedge}$.

A subtraction unit 9 outputs a new output frequency command value $\omega_1^{**}$ which is a subtraction value of the output frequency value $\omega_1^*$ and the correction value $\Delta\omega$ of the output frequency value. A phase estimation calculation unit 10 integrates the new output frequency value $\omega_1^{**}$ and outputs the phase estimation value $\theta_{dc}$.

A d-axis current command setting unit 11 outputs the d-axis current command value $I_d^*$ of a "positive polarity". In a constant torque region, the d-axis current command value $I_c^*$ is set or controlled to a constant value. In a constant output region, $I_d^*$ is variably set or controlled with respect to a torque and a number of rotation. A speed control calculation unit 12 outputs a q-axis current command value $I_q^*$ from a deviation (($\omega_r^* - \omega_r^{\wedge}$) of a speed command value $\omega_r^*$ and the speed estimation value $\omega_r^{\wedge}$.

Based on electric constants ($R_1$, $L_\sigma$, $M$, $L_2$) of the induction motor 1, the current command values $I_d^*$ and $I_q^*$ and the output frequency value $\omega_1^{**}$, a vector control calculation unit 13 outputs d-axis and q-axis voltage reference values $V_{dc}^*$ and $V_{qc}^*$. A d-axis current control calculation unit 14 outputs a d-axis voltage correction value $\Delta V_d^*$ from a deviation ($I_d^* - I_{dc}$) between the d-axis current command value $I_d^*$ and the current detection value $I_{dc}$.

A q-axis current control calculation unit 15 outputs a q-axis voltage correction value $\Delta V_q^*$ from a deviation ($I_q^* - I_{qc}$) between the q-axis current command value $I_q^*$ and the current detection value $I_{qc}$. An addition unit 16 outputs a voltage command value $V_{dc}^{**}$ which is an added value of the d-axis voltage reference value $V_{dc}^*$ and the d-axis voltage correction value $\Delta V_d^*$.

An addition unit 17 outputs a voltage command value $V_{qc}^{**}$ which is an added value of a q-axis voltage reference value $V_{qc}^*$ and the q-axis voltage correction value $\Delta V_q^*$. A coordinate conversion unit 18 outputs three-phase AC voltage command values $V_u^*$, $V_v^*$, $V_w^*$ from the voltage command values $V_{dc}^{**}$ and $V_{qc}^{**}$ and the phase estimation value $\theta_{dc}$.

First, a basic operation of a speed-sensorless control method without using the frequency correction calculation unit 8, which is a feature of the present embodiment, will be described.

The d-axis current command setting unit 11 outputs the current command value $I_d{}^*$ required for generating a d-axis secondary magnetic flux value $\phi_{2d}$ of the induction motor 1. Further, in the speed control calculation unit 12, the q-axis current command value $I_q{}^*$ is calculated from the calculation shown in (Equation 1) such that the speed estimation value $\omega_r{}^\wedge$ coincides with or approaches the speed command value $\omega_r{}^*$.

In (Equation 1), when the speed control calculation unit is in a proportional control configuration ($Kp_{ASR} \neq 0$, $Ki_{ASR} = 0$), the speed estimation value $\omega_r{}^\wedge$ follows up the speed command value $\omega_r{}^*$ such that the speed estimation value $\omega_r{}^\wedge$ approaches the speed command value $\omega_r{}^*$ (a steady-state deviation: $\omega_r{}^* - \omega_r{}^\wedge \neq 0$). When the speed control calculation unit is in a proportional integration control configuration ($Kp_{ASR} \neq 0$, $Ki_{ASR} \neq 0$), the speed estimation value $\omega_r{}^\wedge$ follows up the speed command value $\omega_r{}^*$ such that the speed estimation value $\omega_r{}^\wedge$ coincides with the speed command value $\omega_r{}^*$ (a steady-state deviation: $\omega_r{}^* - \omega_r{}^\wedge = 0$) by an integration calculation. Whether the speed control calculation unit is formed in the proportional control configuration or the proportional integration control configuration is determined based on a system to be applied or stability of the system.

[Equation 1]

$$I_q{}^* = (Kp_{ASR} + \frac{Ki_{ASR}}{s})(\omega r^* - \omega r^\wedge) \quad \text{------------------------------------------------------} (1)$$

wherein $Kp_{ASR}$ is a proportional gain of speed control and $Ki_{ASR}$ is an integration gain of the speed control.

In the vector control calculation unit 13, the d-axis and q-axis current command values $I_d{}^*$ and $I_q{}^*$, the electric constants ($R_1$, $L_\sigma$, M, $L_2$) of the induction motor 1, the d-axis secondary magnetic flux command value $\phi_{2d}{}^*$ and the output frequency value $\omega_1{}^{**}$ are used to calculate the voltage reference values $V_{dc}{}^*$ and $V_{qc}{}^*$ shown in (Equation 2).

[Equation 2]

$$\begin{bmatrix} V_{dc}{}^* = R_1 \cdot I_d{}^* - \omega_1{}^{**} \cdot L_\sigma \cdot \dfrac{1}{1 + T_{ACR} \cdot s} I_q{}^* \\[2mm] V_{qc}{}^* = R_1 \cdot I_q{}^* + \omega_1{}^{**} \cdot L_\sigma \cdot \dfrac{1}{1 + T_{ACR} \cdot s} I_d{}^* + \omega_1{}^{**} \cdot \dfrac{M}{L_2} \cdot \phi_{2d}{}^* \end{bmatrix} \quad \text{--------------------------------------} (2)$$

wherein $T_{ACR}$ is a current control delay time constant, $R_1$ is a primary resistance value, $L_\sigma$ is a leakage inductance value, M is a mutual inductance value, and $L_2$ is a secondary inductance value.

The d-axis current control calculation unit 14 receives the d-axis current command value $I_d{}^*$ and the current detection value $I_{dc}$, and the q-axis current control calculation unit 15 receives the q-axis current command value $I_q{}^*$ and the current detection value $I_{qc}$. Here, a (proportion + integration) calculation is performed so that the current detection values $I_{dc}$ and $I_{qc}$ of the respective components follow up the current command values $I_d{}^*$ and $I_q{}^*$ according to (Equation 3), and the d-axis and the q-axis voltage correction values $\Delta V_d{}^*$ and $\Delta V_q{}^*$ are output.

[Equation 3]

$$\begin{bmatrix} \Delta V_d{}^* = (Kp_{dACR} + \dfrac{Ki_{dACR}}{s})(I_d{}^* - I_{dc}) \\[2mm] \Delta V_q{}^* = (Kp_{qACR} + \dfrac{Ki_{qACR}}{s})(I_q{}^* - I_{qc}) \end{bmatrix} \quad \text{--------------------------------------------} (3)$$

wherein $K_{pdACR}$ is a proportional gain of d-axis current control, $K_{idACR}$ is an integration gain of the d-axis current control, $K_{pqACR}$ is a proportional gain of q-axis current control, and $K_{iqACR}$ is an integration gain of the q-axis current control. Further, the addition units 16 and 17 calculate the voltage command values $V_{dc}{}^{**}$ and $V_{qc}{}^{**}$ shown in (Equation 4), and control an output of the power converter 2.

[Equation 4]

$$\begin{bmatrix} V_{dc}{}^{**} = V_{dc}{}^{*} + \Delta V_{d}{}^{*} \\ V_{qc}{}^{**} = V_{qc}{}^{*} + \Delta V_{q}{}^{*} \end{bmatrix} \quad\text{-----------------------------------} (4)$$

Further, the speed estimation calculation unit 5 estimates the speed of the induction motor 1 according to (Equation 5). In this speed estimation calculation, $\omega_r{}^{\wedge}$ is calculated by estimating a q-axis induced voltage value by a disturbance observer and dividing it by a magnetic flux coefficient.

[Equation 5]

$$\omega_r{}^{\wedge} = \frac{1}{1+T_{obs}\cdot s} \left[ \frac{V_{qc}{}^{**} - \omega_1{}^{**}\cdot L_\sigma\cdot \frac{1}{1+T_{ACR}\cdot s}\cdot I_d{}^{*} - \left[(R_1+R_2{}')+L_\sigma\cdot s\right]I_{qc}}{\frac{M}{L_2}\phi_{2d}{}^{*}} \right] \quad\text{----------} (5)$$

wherein R2' is a primary side conversion value of a secondary resistance value, and $T_{obs}$ is a speed estimation delay time constant set for the disturbance observer.
Further, the slip frequency calculation unit 6 calculates the slip frequency command value $\omega_s{}^{*}$ of the induction motor 1 according to (Equation 6).

[Equation 6]

$$\omega_s{}^{*} = \frac{1}{T_2\cdot I_d{}^{*}}\cdot \frac{1}{1+T_{ACR}\cdot s} I_q{}^{*} \quad\text{-------------------------------------------} (6)$$

wherein $T_2$ is a secondary time constant value.
Further, in the addition unit 7, the output frequency value $\omega_1{}^{*}$ shown in (Equation 7) is calculated by using the speed estimation value $\omega_r{}^{\wedge}$ and the slip frequency command value $\omega_s{}^{*}$.

[Equation 7]

$$\omega 1^* = \omega_r \hat{} + \omega s^* \quad \text{------------------------------------------------------------------------------------------------------ (7)}$$

A phase estimation calculation unit 10 estimates the phase $\theta_d$ of the magnetic flux axis of the induction motor 1 according to (Equation 8).

[Equation 8]

$$\theta_{dc} = \frac{1}{s} \cdot \omega 1^* \quad \text{------------------------------------------------------------------------------------------------------ (8)}$$

A sensorless control operation is executed based on the phase estimation value $\theta_{dc}$ which is an estimation value of the phase $\theta_d$ of the magnetic flux axis as a control reference. The above is a basic operation.

Hereinafter, control characteristics will be described where the frequency correction calculation unit 8, which is a feature of the present embodiment, is used.

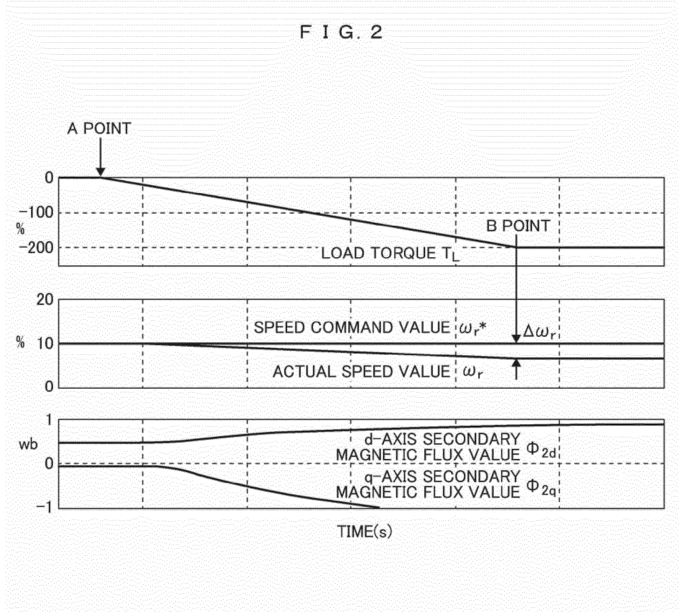

Fig. 2 shows simulation results of load operation characteristics when JP 08-317698 A, which is a conventional technique, is used.

While the induction motor 1 is speed-controlled at 10% of a rated speed, a ramp-like regenerative torque $\tau_L$ is given from a point A to a point B until it reaches a level of -200%. A q-axis secondary magnetic flux $\phi_{2q}$ inside the induction motor 1 is generated to be "negative" and a d-axis secondary magnetic flux $\phi_{2d}$ increases to be "positive", but it can be seen that an actual speed value $\omega_r$ is lower than the speed command value $\omega_r^*$ and a steady-state speed deviation $\Delta\omega_r$ is generated after the point B shown in the figure.

That is, there is a problem that the speed control characteristic deteriorates in the regenerative operation. Here, if the frequency correction calculation unit 8, which is a feature of the present embodiment, is used, this speed control characteristic can be improved. This will be described below.

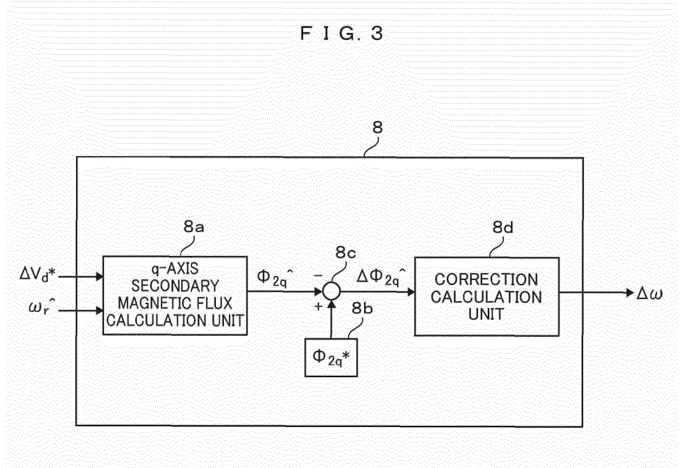

Fig. 3 shows a block diagram of the frequency correction calculation unit 8 according to the embodiment.

A q-axis secondary magnetic flux calculation unit 8a receives the d-axis voltage correction value $\Delta V_d^*$ and the speed estimation value $\omega_r\hat{}$ and calculates the q-axis secondary magnetic flux estimation value $\phi_{2q}\hat{}$ from (Equation 9).

[Equation 9]

$$\phi_{2q}\hat{} = -\frac{\Delta V_d^*}{M/L_2 \, \omega_r\hat{}} \quad \text{------------------------------------------------------------------------------------------------------ (9)}$$

A q-axis secondary magnetic flux command setting unit 8b outputs a q-axis secondary magnetic flux command value $\phi_{2q}^*$.

A subtraction unit 8c outputs $\Delta\phi_{2q}\hat{}$ which is a deviation between the q-axis secondary magnetic flux estimation value $\phi_{2q}\hat{}$ and the q-axis secondary magnetic flux command value $\phi_{2q}^*$.

A correction calculation unit 8d calculates and outputs the correction value $\Delta\omega$ of the output frequency value so as to suppress $\Delta\phi_{2q}\hat{}$. Here, a configuration of the correction calculation unit 8d will be described.

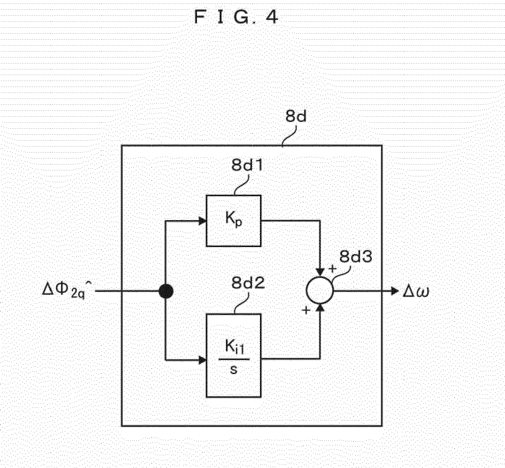

Fig. 4 is a case where the correction calculation unit is formed in a (proportion + integration) configuration. $\Delta\phi_{2q}\hat{}$ which is the deviation between the q-axis secondary magnetic flux estimation value $\phi_{2q}\hat{}$ and the q-axis secondary magnetic flux command value $\phi_{2q}^*$ is input to a proportional calculation unit 8d1 having a constant of $K_p$ and an integration calculation unit 8d2 having a constant of $K_{i1}$, and output signals of the units 8d1 and 8d2 are input to an addition unit 8d3.

That is, the correction value $\Delta\omega$ of the output frequency value is calculated from the calculation shown in (Equation 10).

[Equation 10]

$$\Delta\omega = (Kp + \frac{Ki_1}{s})\Delta\phi_{2q}^{\ \wedge} \ \text{------------------------------------------------------ (10)}$$

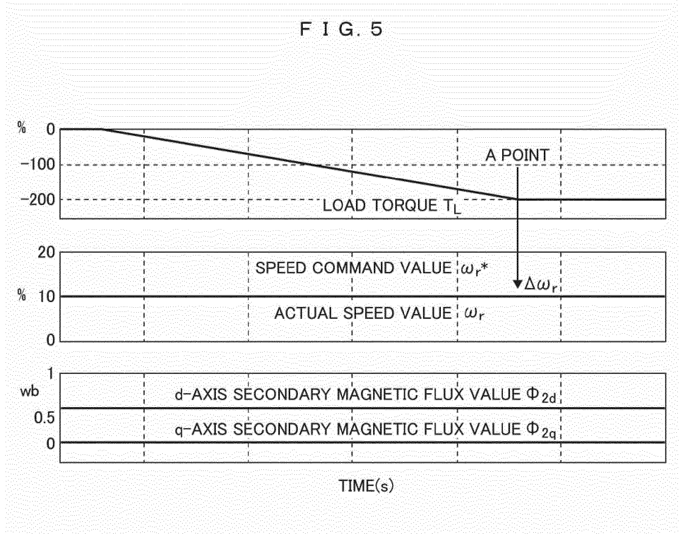

Simulation results of load operation characteristics according to this example are shown in Fig. 5 (load conditions are set as those used in Fig. 2). When the results of the load characteristics disclosed in Fig. 2 and Fig. 5 are compared, it can be seen that, in the case of control using the frequency correction calculation unit 8, which is a feature of the present embodiment, accuracies of both the d-axis and q-axis secondary magnetic flux values $\phi_{2d}$ and $\phi_{2q}$ inside the induction motor in the drawing are improved remarkably, and the steady-state speed deviation $\Delta\omega_r = 0$ (the speed command value $\omega_r^* =$ the actual speed value $\omega_r$) of the actual speed value $\omega_r$ of the induction motor. The effect of the frequency correction calculation unit 8 of this embodiment is obvious.

That is, it is a feature of the present embodiment to add a feedback loop related with generation of $\phi_{2q}$ by calculating the q-axis secondary magnetic flux value $\phi_{2q}$ from the d-axis voltage correction value $\Delta V_d^*$ and correcting the output frequency value $\omega_1^*$, and the feature makes it possible to realize a more accurate speed control, as compared with the conventional characteristic in Fig. 2.

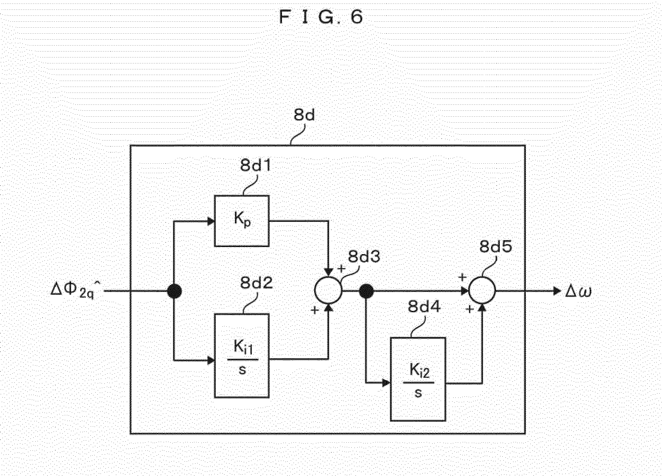

Further, in the embodiment described above, the operation configuration is the (proportion + integration) in the correction calculation unit 8d in the frequency correction calculation unit 8, but, as shown in Fig. 6, an output value configured by the proportional integration may be further integrated. 8d1, 8d2, and 8d3 in the figure are the same as those in Fig. 4. In the configuration of Fig. 6, an integration calculation unit 8d4 having a constant of $K_{i2}$ and an addition unit 8d5 are added. An output signal of the integration calculation unit 8d4 is added to the output signal of the addition unit 8d3 which was the output of Fig. 4.

That is, the correction value $\Delta\omega$ of the output frequency value is calculated according to (Equation 11).

[Equation 11]

$$\Delta\omega = (Kp + \frac{Ki_1}{s})(1 + \frac{Ki_2}{s})\Delta\phi_{2q}^{\ \wedge} \ \text{------------------------------------------------ (11)}$$

By adopting such a configuration, an action of bringing the q-axis secondary magnetic flux estimation value $\phi_{2q}^{\wedge}$ closer to the q-axis secondary magnetic flux command value $\phi_{2q}^*$ becomes larger. In other words, a stability of a feedback loop related to suppression of the q-axis secondary magnetic flux value $\phi_{2q}$ can be improved, and a stable operation with little torque fluctuation can be realized.

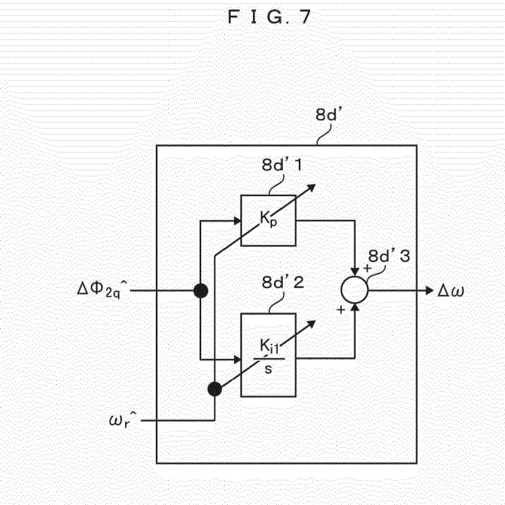

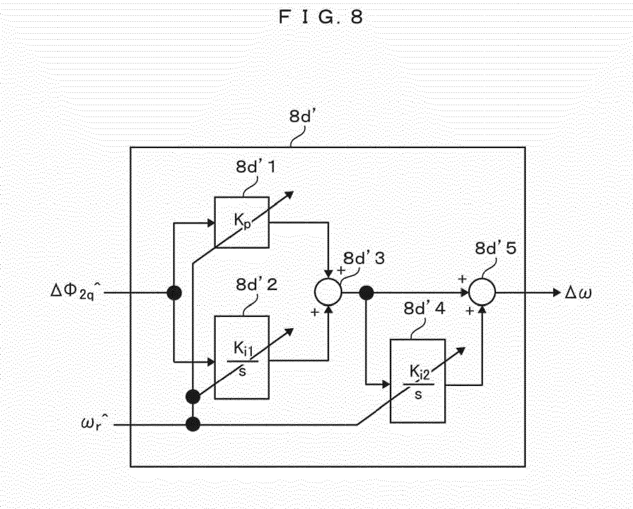

Further, the gains ($K_p$, $K_{i1}$, $K_{i2}$) of the proportional calculation and the integration calculation are fixed values in the correction calculation unit 8d in the frequency correction calculation unit 8, but, as shown in Figs. 7 and 8, the gains may be changed according to the speed estimation value $\omega_r^{\wedge}$.

8d' in Figs. 7 and 8 corresponds to 8d in Figs. 4 and 6, respectively. In Fig. 7, $\Delta\phi_{2q}^{\wedge}$, which is the deviation between the q-axis secondary magnetic flux estimation value $\phi_{2q}^{\wedge}$ and the q-axis secondary magnetic flux command value $\phi_{2q}^*$, is input to a proportional calculation unit 8d'1 having $K_p'$ that varies according to a magnitude of the speed estimation value $\omega_r^{\wedge}$ and an integration calculation unit 8d'2 having $K_{i'1}$, and these are added in an addition unit 8d'3 to obtain the correction value $\Delta\omega$ of the output frequency value.

Further, 8d'1, 8d'2 and 8d'3 in Fig. 8 are the same as those in Fig. 7. In the configuration of Fig. 8, an integration calculation unit 8d'4 having $K_{i'2}$ which varies according to the magnitude of the speed estimation value $\omega_r^{\wedge}$ and an addition unit 8d'5 are added. An output signal of the integration calculation unit 8d'4 is added to the output signal of the adding unit 8d'3 which was the output of Fig. 7.

In Figs. 7 and 8, $K_p'$, $K_{i'i}$ and $K_{i'2}$ are changed substantially in proportion to the magnitude of the speed estimation value $\omega_r^{\wedge}$, whereby an action of bringing the q-axis secondary magnetic flux estimation value $\phi_{2q}^{\wedge}$ closer to the q axis secondary magnetic flux command value $\phi_{2q}^*$ changes according to the speed. In other words, from a low speed range to a high speed range of the induction motor, the stability of the feedback loop related to the generation of the q-axis secondary magnetic flux value $\phi_{2q}$ can be improved and an operation with less torque fluctuation can be realized.

Further, a switching element constituting the power converter 2 of the present embodiment may be a Si (silicon) semiconductor element or a wide band gap semiconductor element such as SiC (silicon carbide) or GaN (gallium nitride).

<Second Embodiment>

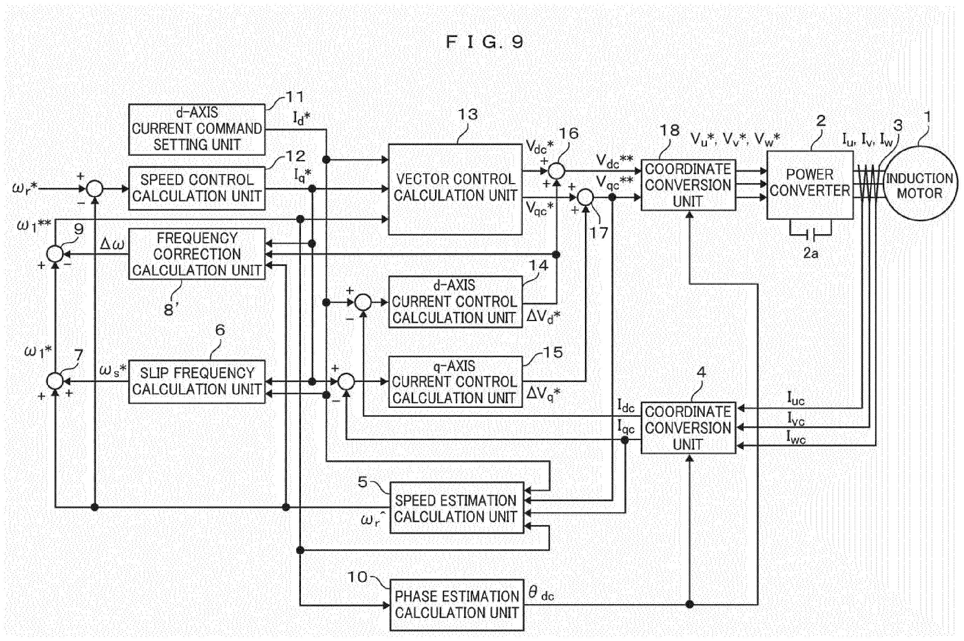

Fig. 9 is a configuration diagram of a power conversion device according to an embodiment. In the first embodiment, the q-axis secondary magnetic flux command value in the frequency correction calculation unit 8 is set to a fixed value, but, in the present embodiment, the q-axis secondary magnetic flux command value is changed. In the drawing, 1 to 7, 9 to 18, and 2a are the same as those in Fig. 1.

A frequency correction calculation unit 8' outputs the correction value $\Delta\omega$ of the output frequency value $\omega_1{}^*$ based on the d-axis voltage correction value $\Delta V_d{}^*$, the speed estimation value $\omega_r{}^\wedge$ and the q-axis current command value $I_q{}^*$.

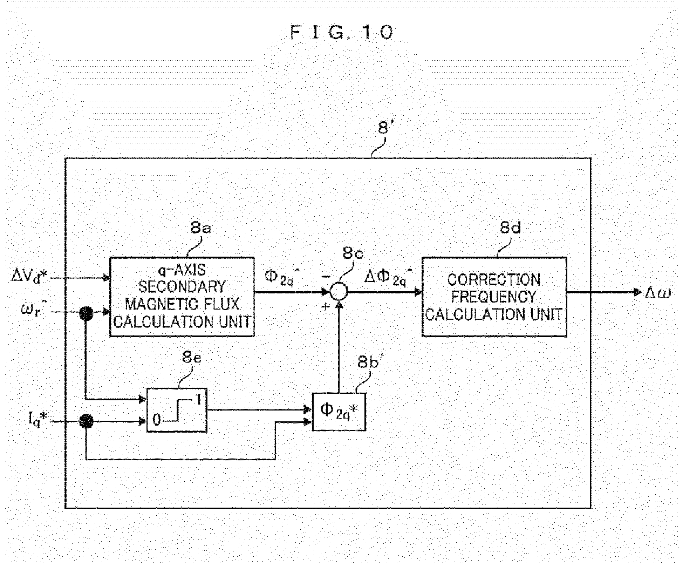

Fig. 10 shows a configuration of the frequency correction calculation unit 8'. 8a, 8c and 8d are the same as those of the frequency correction calculation unit 8 in the first embodiment.

8e is a power running/regenerative operation mode determination unit. 8e determines that the mode is the power running mode and outputs "0" when the q-axis current command value $I_q{}^*$ and the speed estimation value $\omega_r{}^\wedge$ have the same sign, and determines that the mode is the regenerative operation mode and outputs "1" when $I_q{}^*$ and $\omega_r{}^\wedge$ have different signs. 8b' is a q-axis secondary magnetic flux command setting unit. In 8b', $\phi_{2q}{}^*$ is set to be zero when the output of 8e is "0", and $\phi_{2q}{}^*$ is set to be zero or a value of the same polarity as that of the q-axis current command value $I_q{}^*$ when the output of 8e is "1." That is, during the regenerative operation, $\phi_{2q}{}^*$ is set or controlled to be a constant value of the same sign as that of $I_q{}^*$, thereby realizing a speed control with high accuracy and robustness.

In the regenerative operation, $\phi_{2q}{}^*$ is set to a constant value of the same sign as that of $I_q{}^*$, but a magnitude of $\phi_{2q}{}^*$ relates to a setting error $\Delta R_1$ of a primary resistance value of the induction motor 1 or an error voltage value when performing a dead time compensation of the switching element constituting the power converter.

When these set values and the actual values are equal, $\phi_{2q}{}^* = 0$ is sufficient. However, for example, if $\phi_{2q}{}^*$ is set approximately in inverse proportion to the magnitude of the speed estimation value in consideration of a setting error in advance, it is possible to realize a more stable operation. The value of $\phi_{2q}{}^*$ is an example and is not limited to this value.

<Third Embodiment>

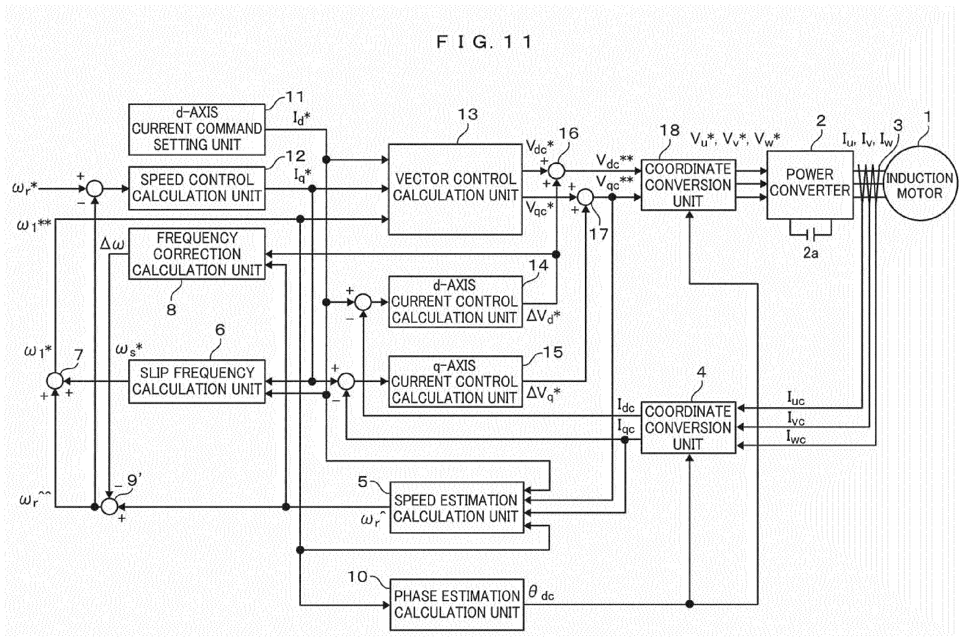

Fig. 11 is a configuration diagram of a power converter according to an embodiment. In the first embodiment, the output frequency value $\omega_1{}^*$ is corrected from the output value of the frequency correction calculation unit 8. However, in the present embodiment, the speed estimation value $\omega_r{}^\wedge$ is corrected. In the drawing, 1 to 8, 10 to 18, 2a are the same as those in Fig. 1.

A subtraction unit 9' outputs a new speed estimation value $\omega_r{}^{\wedge\wedge}$ obtained by subtracting the frequency correction value $\Delta\omega$ from the calculated speed estimation value $\omega_r{}^\wedge$. In the speed control calculation unit 12, the q-axis current command value $I_q{}^*$ is calculated such that the speed estimation value $\omega_r{}^{\wedge\wedge}$ coincides with or approaches the speed command value $\omega_r{}^*$.

That is, by correcting the speed estimation value instead of the output frequency value, it is possible to realize a high-accuracy speed control in the same way as the first embodiment, and the same effect can be obtained.

<Fourth Embodiment>

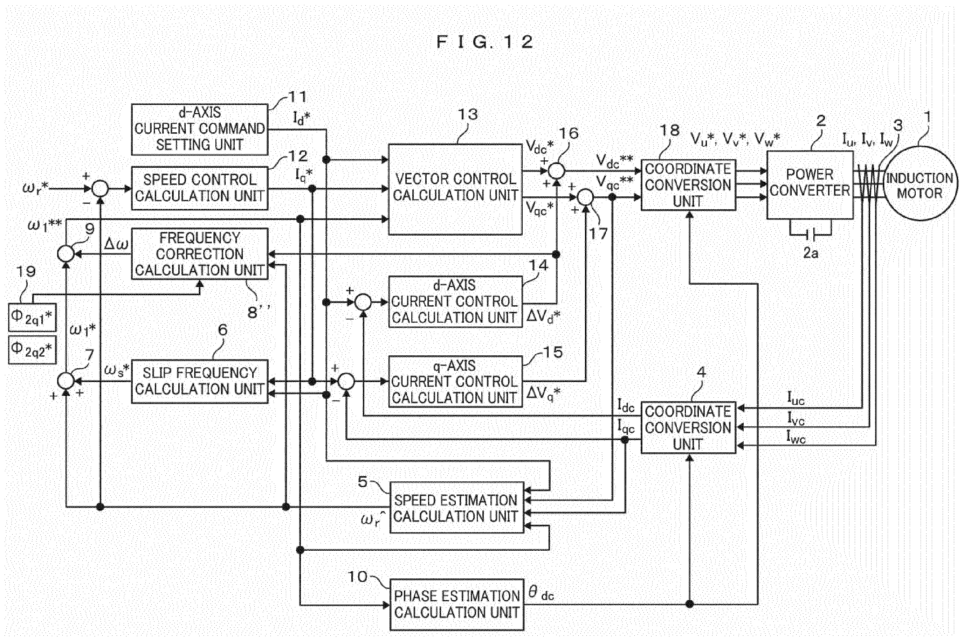

Fig. 12 is a configuration diagram of a power converter according to an embodiment. In the first to third embodiments, one q-axis secondary magnetic flux command value $\phi_{2q}{}^*$ is set in the correction calculation unit 8d of the frequency correction calculation unit 8, but in the present embodiment, two q-axis secondary magnetic flux command values are set. In the drawing, 1 to 7, 9 to 18, 2a are the same as those in Fig. 1.

19 sets two q-axis secondary magnetic flux command set values ($\phi_{2q1}{}^*$ and $\phi_{2q2}{}^*$). For example, zero is set for the first q-axis secondary magnetic flux command set value $\phi_{2q1}{}^*$, and a value equal to or less than the d-axis secondary magnetic flux command $\phi_{2d}{}^*$ having the same polarity as that of the q-axis current command value $I_q{}^*$ is set for the second q-axis secondary magnetic flux command set value $\phi_{2q2}{}^*$.

First, a frequency calculation unit 8" sets the q-axis secondary magnetic flux command value to the first q-axis secondary magnetic flux command value ($\phi_{2q1}{}^*$) and performs an actual operation. As a result, in the case of an insufficient torque condition or an overcurrent trip, the q-axis secondary magnetic flux command value is automatically changed to the second q-axis secondary magnetic flux command value ($\phi_{2q2}{}^*$) at the subsequent calculation timing. By adopting such a configuration, it is possible to set an optimum q-axis secondary magnetic flux command value.

Further, in the present embodiment, a method for controlling has been described which uses two set values which are the first set value and the second set value as the q-axis secondary magnetic flux command value, but it is also possible to use three or more set values. In this way, by providing several q-axis secondary magnetic flux command values, it is possible to realize a stable and high-accuracy speed control in any load torque state (a magnitude or an inclination of the torque).

<Fifth Embodiment>

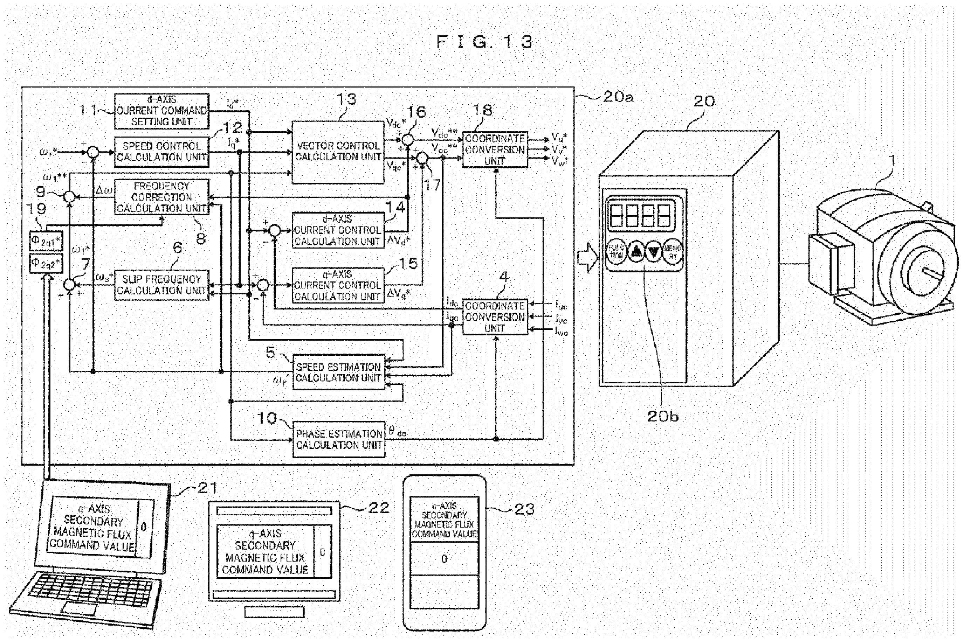

Fig. 13 is a configuration diagram of a power converter according to an embodiment. The present embodiment applies to an induction motor drive system. In the drawing, the constituent elements 1 to 18 and 2a are the same as those in Fig. 1.
The induction motor 1, which is a constituent element of Fig. 1, is driven by a power conversion device 20. In the power conversion device 20, 1 to 18 and 2a in Fig. 1 are implemented as software and hardware.
The q-axis secondary magnetic flux command value ($\phi_{2q}{}^*$, $\phi_{2q1}{}^*$, $\phi_{2q2}{}^*$) may be set by a host device such as a digital operator 20b of the power conversion device 20, a personal computer 21, a tablet 22, a smartphone 23, etc.
If this embodiment is applied to an induction motor drive system, it is possible to realize high-accuracy speed control characteristics.
Further, the present embodiment is described using the first embodiment, but the second to fourth embodiments may be used.
In the first to fifth embodiments so far, the voltage correction values $\Delta V_d{}^*$ and $\Delta V_q{}^*$ are created from the current command values $I_d{}^*$ and $I_q{}^*$ and the current detection values $I_{dc}$ and $I_{qc}$, and the calculation shown in (Equation 2) in which the voltage correction value and the voltage reference value of the vector control are added is executed. However, the embodiments may be applied to a vector control method in which intermediate current command values $I_d{}^{**}$ and $I_q{}^{**}$ shown in (Equation 12) used for a vector control calculation are created from the current command values $I_d{}^*$ and $I_q{}^*$ and the current detection values $I_{dc}$ and $I_{qc}$, and voltage command values $V_{dc}{}^{***}$ and $V_{qc}{}^{***}$ according to (Equation 13) are calculated, using the current command values, the output frequency value $\omega_1{}^{**}$ and the electric constant of the induction motor 1.

[Equation 12]

$$\begin{bmatrix} I_d{}^{**} = (K_{pdACR1} + \dfrac{K_{idACR1}}{s})(I_d{}^* - I_{dc}) \\ I_q{}^{**} = (K_{pqACR1} + \dfrac{K_{iqACR1}}{s})(I_q{}^* - I_{qc}) \end{bmatrix} \text{\textemdash\textemdash\textemdash\textemdash\textemdash\textemdash\textemdash} (12)$$

wherein $K_{pdACR1}$ is a proportional gain of the d-axis current control, $K_{idACR1}$ is an integral gain of the d-axis current control, $K_{pqACR1}$ is a proportional gain of the q-axis current control, $K_{iqACR1}$ is an integral gain of q-axis current control, $T_d$ is an electric time constant ($L_d/R$) of the d axis, and $T_q$ is an electric time constant ($L_q/R$) of the q axis,

[Equation 13]

$$\left[\begin{array}{l} V_{dc}^{***} = R_1 \cdot I_d^{**} - \omega_1^{**} \cdot L_\sigma \cdot \dfrac{1}{1+T_d \cdot s} I_q^{**} \\[4mm] V_{qc}^{***} = R_1 \cdot I_q^{**} + \omega_1^{**} \cdot L_\sigma \cdot \dfrac{1}{1+T_q \cdot s} I_q^{**} + \omega_1^{**} \cdot \dfrac{M}{L_2} \cdot \phi_{2d}^{*} \end{array}\right] \quad\text{------------------------------------------------- (13)}$$

Further, the embodiments may be applied to a vector control method in which a voltage correction value $\Delta V_{d\_p}^{*}$ of a d-axis proportional calculation component used for the vector control calculation, a voltage correction value $\Delta V_{d\_i}^{*}$ of a d-axis integration calculation component, a voltage correction value $\Delta V_{q\_p}^{*}$ of a q-axis proportional calculation component, and a voltage correction value $\Delta V_{q\_i}^{*}$ of a q-axis integration calculation component are calculated according to (Equation 14), from the current command values $I_d^{*}$ and $I_q^{*}$ and the current detection values $I_{dc}$ and $I_{qc}$, and

[Equation 14]

$$\left[\begin{array}{l} \Delta V_{d\_p}^{*} = K_{pdACR}\left(I_d^{*} - I_{dc}\right) \\[4mm] \Delta V_{d\_i}^{*} = \dfrac{K_{idACR}}{s}\left(I_d^{*} - I_{dc}\right) \\[4mm] \Delta V_{q\_p}^{*} = K_{pqACR}\left(I_q^{*} - I_{qc}\right) \\[4mm] \Delta V_{q\_i}^{*} = \dfrac{K_{iqACR}}{s}\left(I_q^{*} - I_{qc}\right) \end{array}\right] \quad\text{---------------------------------------------- (14)}$$

voltage command values $V_{dc}^{****}$ and $V_{qc}^{****}$ are calculated according to (Equation 15), using the voltage correction values, the output frequency value $\omega_1^{**}$ and the electric constant of the induction motor 1.

[Equation 15]

$$\left[\begin{array}{l} V_{dc}^{****} = \left(\Delta V_{d\_p}^{*} + \Delta V_{d\_i}^{*}\right) - \omega_1^{**} \cdot \dfrac{L_\sigma}{R_1} \cdot \Delta V_{q\_i}^{*} \\[4mm] V_{dc}^{****} = \left(\Delta V_{q\_p}^{*} + \Delta V_{q\_i}^{*}\right) + \omega_1^{**} \cdot \dfrac{L_\sigma}{R_1} \cdot \Delta V_{d\_i}^{*} + \omega_1^{**} \cdot \dfrac{M}{L_2} \cdot \phi_{2d}^{*} \end{array}\right] \quad\text{------------------------------- (15)}$$

Further, the embodiments may also be applied to a control method in which an output frequency command value $\omega_1^{***}$ shown in (Equation 16) and voltage command values $V_{dc}^{*****}$ and $V_{qc}^{*****}$ shown in (Equation 17) are calculated, using the d-axis current command value $I_d^{*}$, a primary delay signal $I_{qctd}$ of the q-axis current detection value $I_{qc}$, the speed command value $\omega_r^{*}$ and the electrical constant of the induction motor 1.

[Equation 16]

$$\omega_1^{***} = \omega_r^* + \frac{1}{T_2 \cdot Id^*} \cdot Iqc \quad \text{------------------------------------------------- (16)}$$

[Equation 17]

$$\left[ \begin{array}{l} V_{dc}^{*****} = R_1 \cdot Id^* - \omega_1^{**} \cdot L\sigma \cdot Iqctd \\ V_{qc}^{*****} = R_1 \cdot Id^* + \omega_1^{**} \cdot L\sigma \cdot Id^* + \omega_1^{***} \cdot \frac{M}{L_2} \cdot \phi_{2d}^* \end{array} \right] \quad \text{------------------------------------ (17)}$$

In the first to sixth embodiments so far, the speed estimation calculation unit 5 calculates the speed estimation value according to (Expression 5), but both the current control and the speed estimation may be used in the q-axis current control.

A speed estimation value $\omega_r{}^{\wedge\wedge\wedge}$ is calculated, as shown in Equation (18).

[Equation 18]

$$\omega_r{}^{\wedge\wedge\wedge} = (K_{pqACR2} + \frac{K_{iqACR2}}{s})(I_q^* - Iqc) \quad \text{-------------------------------------------- (18)}$$

wherein $K_{pqACR2}$ is a proportional gain of current control and $K_{iqACR2}$ is an integration gain of the current control.

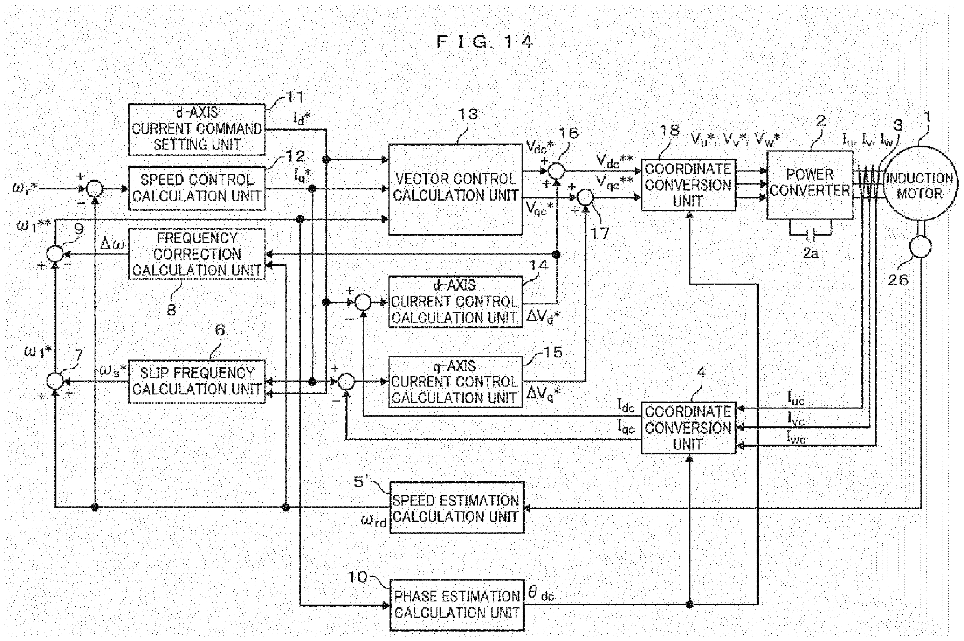

Further, in the first to fifth embodiments so far, the speed estimation calculation unit 5 calculates the speed estimation value according to (Expression 5). However, as disclosed in Fig. 14, a method may be used in which a speed detection encoder 26 is attached to the induction motor 1 and a speed detection value is calculated from an encoder signal.

In this case, by attaching the speed detection encoder to the induction motor 1 and providing a speed detection calculation unit 5' in place of the speed estimation calculation unit 5 disclosed in the first to fifth embodiments, it is possible to accurately detect an actual speed value (a speed detection value) $\omega_{rd}$ of the induction motor 1.

<Sixth Embodiment>

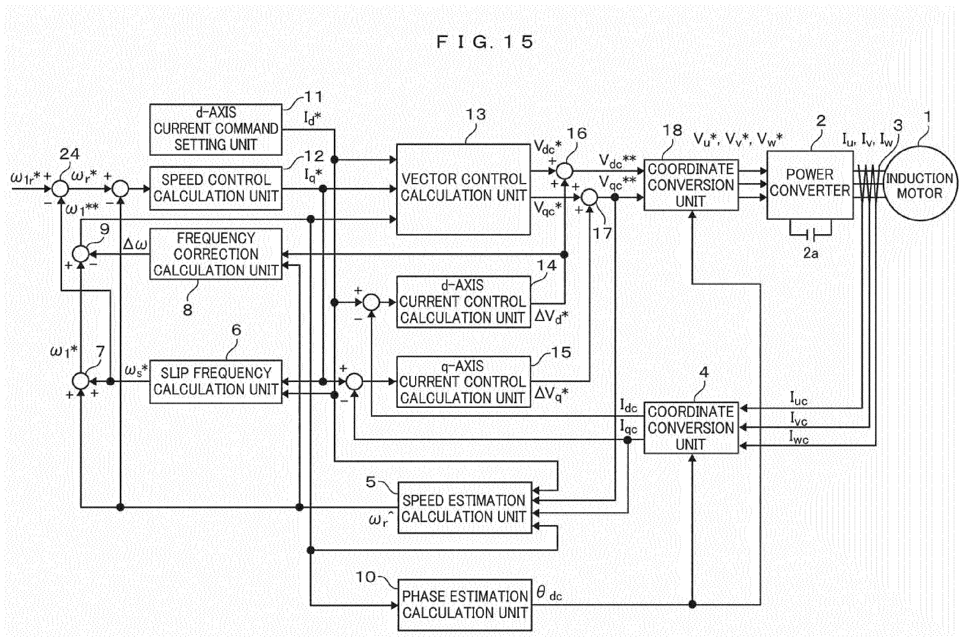

Fig. 15 is a configuration diagram of a power converter according to an embodiment. The same effect can be obtained even when a constituent element 8 is replaced with a constituent element 8' or 8" and a constituent element 9 is replaced with a constituent element 9' in Fig. 15. A difference is that an output frequency $\omega_{1r}^*$ rather than the speed command value $\omega_r^*$ is given as a command value.

A subtracting unit 24 subtracts the slip frequency command value $\omega_s^*$ from the output frequency command value $\omega_{1r}^*$, and outputs the speed command value $\omega_r^*$.

As disclosed in Fig. 14, the speed detection calculation unit 5' may be provided in place of the speed estimation calculation unit 5 to calculate the speed detection value $\omega_{rd}$ as a substitute for the speed estimation value $\omega_r{}^{\wedge}$ of the induction motor 1.

<Seventh Embodiment>

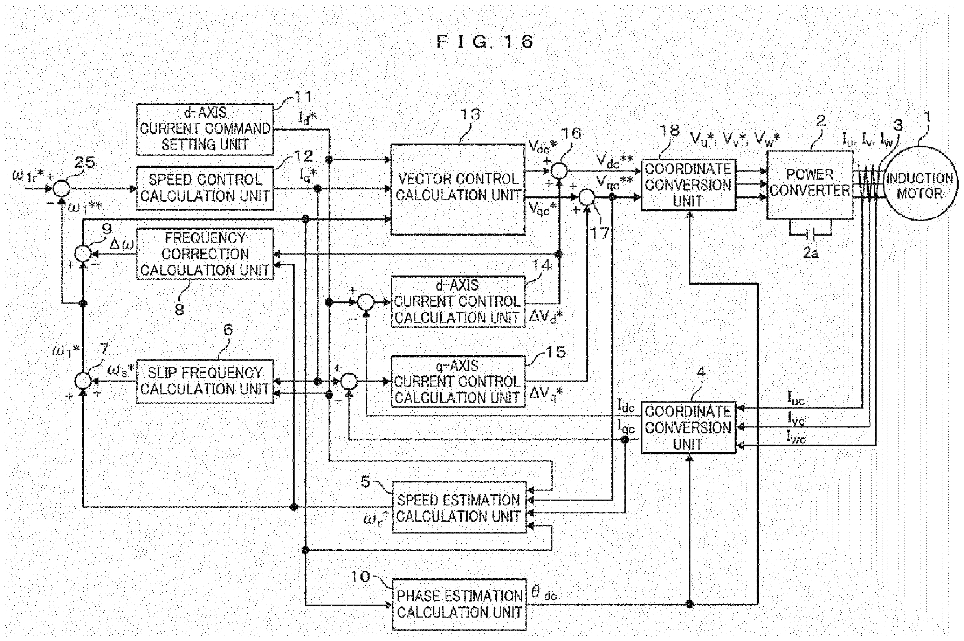

Fig. 16 is a configuration diagram of a power converter according to an embodiment. The same effect can be obtained even when a constituent element 8 is replaced with a constituent element 8' or 8" and a constituent element 9 is replaced with a constituent element 9' in Fig. 16. A difference is that the output frequency $\omega_{1r}^*$ rather than the speed command value $\omega_r^*$, is given as a command value, and a subtraction unit 25 subtracts the output frequency value $\omega_1^*$ from the output frequency command value $\omega_{1r}^*$ to provide an input signal to the speed control calculation unit. As disclosed in Fig. 14, the speed detection calculation unit 5' may be provided in place of the speed estimation calculation unit 5 to calculate the speed detection value $\omega_r$ as a substitute for the speed estimation value $\omega_r^\wedge$ of the induction motor 1.

REFERENCE SIGNS LIST

1 ... induction motor, 2 ... power converter, 2a ... DC power supply, 3 ... current detector, 4 ... coordinate conversion unit, 5 ... speed estimation calculation unit, 6 ... slip frequency calculation unit, 7 ... addition unit, 8, 8', 8"... frequency correction calculation unit, 9, 24 ... subtraction unit, 10 ... phase estimation calculation unit, 11 ... d-axis current command setting unit, 12 ... speed control calculation unit, 13 ... vector control calculation unit, 14 ... d-axis current control calculation unit, 15 ... q-axis current control calculation unit, 16, 17, 25 ... addition unit, 18 ... coordinate conversion unit, 20 ... power conversion device, 20a ... contents of the power conversion device, 22 ... personal computer, 23 ... tablet, 24 ... subtraction unit, 25 ... subtraction unit, 26 ... speed detection encoder, $I_d^*$ ... d-axis current command value, $I_q^*$ ... q-axis current command value, $\omega_r$ ... speed of induction motor 1, $\omega_r^\wedge$ ... speed estimation value, $\omega_r^{\wedge\wedge}$ ... new speed estimation value, $\omega_{rd}$ ... speed detection value, $\omega_s$ ... slip of induction motor 1, $\omega_s^*$ ... slip frequency command value, $\omega_{1r}^*$ ... output frequency command value, $\omega_{1r}$ ... output frequency value, $\omega_1^*$ ... output frequency value of induction motor 1, $\omega_1^{**}$ ... new output frequency value, $\Delta\omega$ ... correction amount of output frequency value, $\theta_{dc}$ ... phase estimation value, $\omega_r^*$ ... speed command value, $V_{dc}^*$ ... reference value of d-axis voltage command, $V_{qc}^*$ ... reference value of q-axis voltage command, $V_{dc}^{**}, V_{dc}^{***}, V_{dc}^{****}, V_{dc}^{*****}$ ... d-axis voltage command value, $V_{qc}^{**}, V_{qc}^{***}, V_{qc}^{****}, V_{qc}^{*****}$ ... q-axis voltage command value

**Claims**

1.  A method for controlling a power conversion device, the method comprising:

    a step for outputting a speed estimation value ($\omega_r^\wedge$ or a speed detection value ($\omega_{rd}$) of an induction motor;
    a step for outputting a slip frequency command value of the induction motor;
    a frequency correction value calculation step for calculating a frequency correction value ($\Delta\omega$) so that a q-axis secondary magnetic flux estimation value ($\phi_{2q}^\wedge$) calculated from the speed estimation value ($\omega_r^\wedge$) or a speed detection value ($\omega$rd) and a d-axis voltage correction value ($\Delta V_d^*$) for current control coincides with or approaches a q-axis secondary magnetic flux command value ($\phi_{2q}^*$);
    a step for generating torque by the magnetic flux generated by the current of the d-axis which is the magnetic flux axis component and the current of the q-axis which is the torque axis, and outputting q-axis current command value ($I_q^*$) as a command value so that the speed estimated value ($\omega_r^\wedge$) or the speed detected value ($\omega_{rd}$) approaches the speed command value; and
    a control step of controlling an output frequency value ($\omega_1^*$, $\omega_1^{**}$) of a power conversion device based on the speed estimation value or the speed detection value, the q-axis current command value, the slip frequency command value of the induction motor, and the frequency correction value.

2.  The method for controlling the power conversion device according to claim 1, including a power converter which includes a switching element, the switching element being controlled according to: a d-axis (a magnetic flux component) current detection value and a q-axis (a torque component) current detection value of the induction motor; an output frequency value of the power conversion device; a voltage reference value based on an electric constant of the induction motor and d-axis and q-axis current command values; a correction voltage value for current control for controlling the d-axis and q-axis current detection values according to the d-axis and q-axis current command values; d-axis and q-axis voltage command values calculated from the voltage reference value and the correction voltage value for current control; a phase estimation value obtained by integrating the output frequency value of the power conversion device; a three-phase AC voltage command value calculated from the d-axis and q-axis voltage command values; and a three-phase AC voltage command value.

3.  The method for controlling the power conversion device according to any one of claims 1 or 2, wherein, in the control step, either one of the slip frequency command value or the speed estimation value is corrected by the frequency correction value.

4.  The method for controlling the power conversion device according to any one of claims 1 to 3, wherein the frequency correction value calculated so that the q-axis secondary magnetic flux estimation value coincides with or approaches the q-axis secondary magnetic flux command value is composed of a proportional calculation value and an integration calculation value.

5. The method for controlling the power conversion device according to any one of claims 1 to 3, wherein the frequency correction value calculated so that the q-axis secondary magnetic flux estimation value coincides with or approaches the q-axis secondary magnetic flux command value is formed by further integrating an output value formed by a proportional calculation and an integration calculation.

6. The method for controlling the power conversion device according to claim 4 or 5, wherein, in the control step, a control gain formed by the proportional calculation and the integration calculation is automatically corrected, based on the speed estimation value, the speed detection value or a speed command value of the induction motor.

7. The method for controlling the power conversion device according to any one of claims 1 to 3, wherein the q-axis secondary magnetic flux command value is zero in the case of a power running mode, and set or controlled to be zero or have the same polarity as that of a torque command value or the q-axis current command value in the case of a regenerative mode.

8. The method for controlling the power conversion device according to claim 6 or 7, wherein the control gain or the q-axis secondary magnetic flux command value are set in an internal memory of a microcomputer or the like mounted in a power conversion device including a power converter, and the value can be freely set and changed by connecting a digital operator, a personal computer or a tablet, or smartphone equipment.

9. The method for controlling the power conversion device according to claim 8, wherein at least two or more of the q-axis secondary magnetic flux command value can be set, and, when an operation cannot be correctly performed with the first set value, the second and subsequent set values are automatically set.

10. A power conversion device comprising:

a speed detection calculation unit (5) that outputs a speed estimation value ($\omega_r{}^\wedge$) or a speed detection value ($\omega_{rd}$) of an induction motor (1);
a slip frequency calculation unit (6) that outputs a slip frequency command value of the induction motor;
a frequency correction calculation unit (8) that calculates a frequency correction value ($\Delta\omega$) so that a q-axis secondary magnetic flux estimation value calculated from the speed estimation value ($\omega_r{}^\wedge$) or a speed detection value ($\omega_{rd}$) and a d-axis voltage correction value ($\Delta V_d{}^*$) for current control coincides with or approaches a q-axis secondary magnetic flux command value ($\phi_{2q}{}^*$);
the induction motor (1) generates torque by the magnetic flux generated by the current of the d-axis which is the magnetic flux axis component and the current of the q-axis which is the torque axis;
a speed control calculation unit which outputs q-axis current command value ($I_q{}^*$) as a command value so that the speed estimated value ($\omega_r{}^\wedge$) or the speed detected value ($\omega_{rd}$) approaches the speed command value; and
a control unit (7,9) that controls an output frequency value ($\omega_1{}^*$, $\omega_1{}^{**}$) of the power conversion device based on the speed estimation value or the speed detection value, the slip frequency command value of the induction motor, the q-axis current command value, and the frequency correction value.

11. The power conversion device according to claim 10, including a power converter which includes a switching element, the switching element being controlled according to: a d-axis (a magnetic flux component) current detection value and a q-axis (a torque component) current detection value of the induction motor; an output frequency value of the power conversion device; a voltage reference value based on an electric constant of the induction motor and d-axis and q-axis current command values; a correction voltage value for current control for controlling the d-axis and q-axis current detection values according to the d-axis and q-axis current command values; d-axis and q-axis voltage command values calculated from the voltage reference value and the correction voltage value for current control; a phase estimation value obtained by integrating the output frequency value of the power conversion device; a three-phase AC voltage command value calculated from the d-axis and q-axis voltage command values; and a three-phase AC voltage command value.

**Patentansprüche**

1. Verfahren zum Steuern einer Leistungswandlervorrichtung, wobei das Verfahren Folgendes umfasst:

   einen Schritt zum Ausgeben eines Geschwindigkeitsschätzwerts ($\omega_r$^) oder eines Geschwindigkeitsdetektionswerts ($\omega_{rd}$) eines Induktionsmotors;
   einen Schritt zum Ausgeben eines Schlupffrequenzbefehlswerts des Induktionsmotors;
   einen Frequenzkorrekturwertberechnungsschritt zum Berechnen eines Frequenzkorrekturwerts ($\Delta\omega$), so dass ein q-Achsen-Sekundär-Magnetflussschätzwert ($\phi_{2q}$^), der aus dem Geschwindigkeitsschätzwert ($\omega_r$^) oder einem Geschwindigkeitsdetektionswert ($\omega_{rd}$) berechnet wird, und ein d-Achsen-Spannungskorrekturwert ($\Delta V_d$*) zur Stromsteuerung mit einem q-Achsen-Sekundär-Magnetflussbefehlswert ($\Phi_{2q}$*) übereinstimmt oder sich diesem nähert;
   einen Schritt zum Erzeugen von Drehmoment durch den Magnetfluss, der durch den Strom der d-Achse, die die Magnetflussachskomponente ist, und den Strom der q-Achse, die die Drehmomentachse ist, erzeugt wird, und Ausgeben eines q-Achsen-Strombefehlswerts ($I_q$*) als Befehlswert, so dass der geschätzte Geschwindigkeitswert ($\omega_r$^) oder der detektierte Geschwindigkeitswert ($\omega_{rd}$) sich dem Geschwindigkeitsbefehlswert nähert; und
   einen Steuerschritt des Steuerns eines Ausgangsfrequenzwerts ($\omega_1$*, $\omega_1$**) einer Leistungswandlervorrichtung basierend auf dem Geschwindigkeitsschätzwert oder dem Geschwindigkeitsdetektionswert, dem q-Achsen-Strombefehlswert, dem Schlupffrequenzbefehlswert des Induktionsmotors und dem Frequenzkorrekturwert.

2. Verfahren zum Steuern der Leistungswandlervorrichtung nach Anspruch 1, umfassend einen Leistungswandler, der ein Schaltelement umfasst, wobei das Schaltelement gemäß Folgendem gesteuert wird: einem d-Achsen- (eine Magnetflusskomponente) Stromdetektionswert und einem q-Achsen- (eine Drehmomentkomponente) Stromdetektionswert des Induktionsmotors; einem Ausgangsfrequenzwert der Leistungswandlervorrichtung; einem Spannungsreferenzwert, der auf einer elektrischen Konstante des Induktionsmotors und d-Achsen- und q-Achsen-Strombefehlswerten basiert; einem Korrekturspannungswert zur Stromsteuerung zum Steuern der d-Achsen- und q-Achsen-Stromdetektionswerte entsprechend den d-Achsen- und q-Achsen-Strombefehlswerten; d-Achsen- und q-Achsen-Spannungsbefehlswerten, die aus dem Spannungsreferenzwert und dem Korrekturspannungswert zur Stromsteuerung berechnet werden; einem Phasenschätzwert, der durch Integrieren des Ausgangsfrequenzwerts der Leistungswandlervorrichtung erhalten wird; einem Dreiphasen-WS-Spannungsbefehlswert, der aus den d-Achsen- und q-Achsen-Spannungsbefehlswerten berechnet wird; und einem Dreiphasen-WS-Spannungsbefehlswert.

3. Verfahren zum Steuern einer Leistungswandlervorrichtung nach einem der Ansprüche 1 oder 2, wobei im Steuerschritt einer des Schlupffrequenzbefehlswerts und des Geschwindigkeitsschätzwerts durch den Frequenzkorrekturwert korrigiert wird.

4. Verfahren zum Steuern einer Leistungswandlervorrichtung nach einem der Ansprüche 1 bis 3, wobei der Frequenzkorrekturwert, der so berechnet wird, dass der q-Achsen-Sekundär-Magnetflussschätzwert mit dem q-Achsen-Sekundär-Magnetflussbefehlswert übereinstimmt oder sich diesem nähert, sich aus einem Proportionalberechnungswert und einem Integrationsberechnungswert zusammensetzt.

5. Verfahren zum Steuern einer Leistungswandlervorrichtung nach einem der Ansprüche 1 bis 3, wobei der Frequenzkorrekturwert, der so berechnet wird, dass der q-Achsen-Sekundär-Magnetflussschätzwert mit dem q-Achsen-Sekundär-Magnetflussbefehlswert übereinstimmt oder sich diesem nähert, gebildet wird, indem ein durch eine Proportionalberechnung und eine Integrationsberechnung gebildeter Ausgangswert weiter integriert wird.

6. Verfahren zum Steuern einer Leistungswandlervorrichtung nach Anspruch 4 oder 5, wobei im Steuerschritt eine Steuerverstärkung, die durch die Proportionalberechnung und die Integrationsberechnung gebildet wird, basierend auf dem Geschwindigkeitsschätzwert, dem Geschwindigkeitsdetektionswert oder einem Geschwindigkeitsbefehlswert des Induktionsmotors automatisch korrigiert wird.

7. Verfahren zum Steuern einer Leistungswandlervorrichtung nach einem der Ansprüche 1 bis 3, wobei der q-Achsen-Sekundär-Magnetflussbefehlswert im Fall eines Leistungsbetriebsmodus null ist und im Fall eines Regenerationsmodus auf null eingestellt ist oder gesteuert ist, um gleich null zu sein oder die gleiche Polarität wie ein Drehmomentbefehlswert oder der q-Achsen-Strombefehlswert aufzuweisen.

8. Verfahren zum Steuern einer Leistungswandlervorrichtung nach Anspruch 6 oder 7, wobei die Steuerverstärkung oder der q-Achsen-Sekundär-Magnetflussbefehlswert in einem Innenspeicher eines Mikrocomputers oder dergleichen, der in einer einen Leistungswandler umfassenden Leistungswandlervorrichtung montiert ist, eingestellt sind und der Wert durch Verbinden eines digitalen Benutzers, eines PC oder Tablets oder eines Smartphone-Geräts frei eingestellt und verändert werden kann.

9. Verfahren zum Steuern einer Leistungswandlervorrichtung nach Anspruch 8, wobei zumindest zwei oder mehrere des q-Achsen-Sekundär-Magnetflussbefehlswerts eingestellt sein können und, wenn ein Arbeitsvorgang mit dem ersten eingestellten Wert nicht korrekt durchgeführt werden kann, der zweite bzw. die darauffolgenden eingestellten Werte automatisch eingestellt werden.

10. Leistungswandlervorrichtung, die Folgendes umfasst:

eine Geschwindigkeitsdetektionsberechnungseinheit (5), die einen Geschwindigkeitsschätzwert ($\omega_r^\wedge$) oder einen Geschwindigkeitsdetektionswert ($\omega_{rd}$) eines Induktionsmotors (1) ausgibt;
eine Schlupffrequenzberechnungseinheit (6), die einen Schlupffrequenzbefehlswert des Induktionsmotors ausgibt;
eine Frequenzkorrekturberechnungseinheit (8), die einen Frequenzkorrekturwert ($\Delta\omega$) so berechnet, dass ein q-Achsen-Sekundär-Magnetflussschätzwert ($\Phi_{2q}^\wedge$), der aus dem Geschwindigkeitsschätzwert ($\omega_r^\wedge$) oder einem Geschwindigkeitsdetektionswert ($\omega_{rd}$) berechnet wird, und ein d-Achsen-Spannungskorrekturwert ($\Delta V_d^*$) zur Stromsteuerung mit einem q-Achsen-Sekundär-Magnetflussbefehlswert ($\Phi_{2q}^*$) übereinstimmt oder sich diesem nähert;
wobei der Induktionsmotor (1) durch den Magnetfluss, der durch den Strom der d-Achse, die die Magnetflussachskomponente ist, und den Strom der q-Achse, die die Drehmomentachse ist, erzeugt wird, Drehmoment erzeugt;
eine Geschwindigkeitssteuerungsberechnungseinheit, die einen q-Achsen-Strombefehlswert ($I_q^*$) als Befehlswert ausgibt, so dass der geschätzte Geschwindigkeitswert ($\omega_r^\wedge$) oder der detektierte Geschwindigkeitswert ($\omega_{rd}$) sich dem Geschwindigkeitsbefehlswert nähert; und
eine Steuereinheit (7, 9), die einen Ausgangsfrequenzwert ($\omega_1^*$, $\omega_1^{**}$) der Leistungswandlervorrichtung basierend auf dem Geschwindigkeitsschätzwert oder dem Geschwindigkeitsdetektionswert, dem Schlupffrequenzbefehlswert des Induktionsmotors, dem q-Achsen-Strombefehlswert und dem Frequenzkorrekturwert steuert.

11. Leistungswandlervorrichtung nach Anspruch 10, wobei die Vorrichtung einen Leistungswandler umfasst, der ein Schaltelement umfasst, wobei das Schaltelement gemäß Folgendem gesteuert wird: einem d-Achsen- (eine Magnetflusskomponente) Stromdetektionswert und einem q-Achsen- (eine Drehmomentkomponente) Stromdetektionswert des Induktionsmotors; einem Ausgangsfrequenzwert der Leistungswandlervorrichtung; einem Spannungsreferenzwert, der auf einer elektrischen Konstante des Induktionsmotors und d-Achsen- und q-Achsen-Strombefehlswerten basiert; einem Korrekturspannungswert zur Stromsteuerung zum Steuern der d-Achsen- und q-Achsen-Stromdetektionswerte entsprechend den d-Achsen- und q-Achsen-Strombefehlswerten; d-Achsen- und q-Achsen-Spannungsbefehlswerten, die aus dem Spannungsreferenzwert und dem Korrekturspannungswert zur Stromsteuerung berechnet werden; einem Phasenschätzwert, der durch Integrieren des Ausgangsfrequenzwerts der Leistungswandlervorrichtung erhalten wird; einem Dreiphasen-WS-Spannungsbefehlswert, der aus den d-Achsen- und q-Achsen-Spannungsbefehlswerten berechnet wird; und einem Dreiphasen-WS-Spannungsbefehlswert.

## Revendications

1. Procédé de commande d'un dispositif de conversion de puissance, le procédé comprenant :

une étape pour délivrer en sortie une valeur d'estimation de vitesse ($\omega_r^\wedge$) ou une valeur de détection de vitesse ($\omega_{rd}$) d'un moteur à induction ;
une étape pour délivrer en sortie une valeur d'instruction de fréquence de glissement du moteur à induction ;
une étape de calcul de valeur de correction de fréquence pour calculer une valeur de correction de fréquence ($\Delta\omega$) de telle sorte qu'une valeur d'estimation de flux magnétique secondaire d'axe q ($\Phi_{2q}^\wedge$) est calculée à partir de la valeur d'estimation de vitesse ($\omega_r^\wedge$) ou d'une valeur de détection de vitesse ($\omega_{rd}$) et d'une valeur de correction de tension d'axe d ($\Delta V_d^*$) pour que la commande de courant coïncide avec ou s'approche d'une valeur d'instruction de flux magnétique secondaire d'axe q ($\Phi_{2q}^*$) ;
une étape pour générer un couple par l'intermédiaire du flux magnétique généré par le courant de l'axe d qui est la composante d'axe de flux magnétique et le courant de l'axe q qui est l'axe de couple, et délivrer en sortie une valeur d'instruction de courant d'axe q ($I_q$*) en tant que valeur d'instruction de sorte que la valeur estimée de vitesse ($\omega_r$^) ou la valeur détectée de vitesse ($\omega_{rd}$) approche la valeur d'instruction de vitesse ; et

une étape de commande consistant à commander une valeur de fréquence de sortie ($\omega_1$*, $\omega_1$**) d'un dispositif de conversion de puissance sur la base de la valeur d'estimation de vitesse ou de la valeur de détection de vitesse, de la valeur d'instruction de courant d'axe q, de la valeur d'instruction de fréquence de glissement du moteur à induction, et de la valeur de correction de fréquence.

**2.** Procédé de commande du dispositif de conversion de puissance selon la revendication 1, incluant un convertisseur de puissance qui inclut un élément de commutation, l'élément de commutation étant commandé selon : une valeur de détection de courant d'axe d (une composante de flux magnétique) et une valeur de détection de courant d'axe q (une composante de couple) du moteur à induction ; une valeur de fréquence de sortie du dispositif de conversion de puissance ; une valeur de référence de tension sur la base d'une constante électrique du moteur à induction et de valeurs d'instruction de courant d'axe d et d'axe q ; une valeur de tension de correction pour une commande de courant pour commander les valeurs de détection de courant d'axe d et d'axe q selon les valeurs d'instruction de courant d'axe d et d'axe q ; des valeurs d'instruction de tension d'axe d et d'axe q calculées à partir de la valeur de référence de tension et de la valeur de tension de correction pour une commande de courant ; une valeur d'estimation de phase obtenue en intégrant la valeur de fréquence de sortie du dispositif de conversion de puissance ; une valeur d'instruction de tension alternative triphasée calculée à partir des valeurs d'instruction de tension d'axe d et d'axe q ; et une valeur d'instruction de tension alternative triphasée.

**3.** Procédé de commande du dispositif de conversion de puissance selon l'une quelconque des revendications 1 ou 2, dans lequel, dans l'étape de commande, une parmi la valeur d'instruction de fréquence de glissement ou la valeur d'estimation de vitesse est corrigée par la valeur de correction de fréquence.

**4.** Procédé de commande du dispositif de conversion de puissance selon l'une quelconque des revendications 1 à 3, dans lequel la valeur de correction de fréquence calculée de sorte que la valeur d'estimation de flux magnétique secondaire d'axe q coïncide avec ou s'approche de la valeur d'instruction de flux magnétique secondaire d'axe q est composée d'une valeur de calcul proportionnelle et d'une valeur de calcul d'intégration.

**5.** Procédé pour commander le dispositif de conversion de puissance selon l'une quelconque des revendications 1 à 3, dans lequel la valeur de correction de fréquence calculée de sorte que la valeur d'estimation de flux magnétique secondaire d'axe q coïncide avec ou s'approche de la valeur d'instruction de flux magnétique secondaire d'axe q est formée en intégrant en outre une valeur de sortie formée par un calcul proportionnel et un calcul d'intégration.

**6.** Procédé de commande du dispositif de conversion de puissance selon la revendication 4 ou 5, dans lequel, dans l'étape de commande, un gain de commande formé par le calcul proportionnel et par le calcul d'intégration est corrigé automatiquement, sur la base de la valeur d'estimation de vitesse, de la valeur de détection de vitesse ou d'une valeur d'instruction de vitesse du moteur à induction.

**7.** Procédé de commande du dispositif de conversion de puissance selon l'une quelconque des revendications 1 à 3, dans lequel la valeur d'instruction de flux magnétique secondaire d'axe q est nulle dans le cas d'un mode de fonctionnement en puissance, et réglée ou commandée pour être nulle ou avoir la même polarité que celle d'une valeur d'instruction de couple ou de la valeur d'instruction de courant d'axe q dans le cas d'un mode régénératif.

**8.** Procédé de commande du dispositif de conversion de puissance selon la revendication 6 ou 7, dans lequel le gain de commande ou la valeur d'instruction de flux magnétique secondaire d'axe q sont réglés dans une mémoire interne d'un micro-ordinateur ou analogue monté dans un dispositif de conversion de puissance incluant un convertisseur de puissance, et la valeur peut être réglée et modifiée librement en connectant un opérateur numérique, un ordinateur personnel ou une tablette, ou un équipement de smartphone.

**9.** Procédé de commande du dispositif de conversion de puissance selon la revendication 8, dans lequel au moins deux ou plus de la valeur d'instruction de flux magnétique secondaire d'axe q peuvent être réglées, et, lorsqu'une opération ne peut pas être exécutée correctement avec la première valeur réglée, la seconde valeur réglée et les valeurs réglées suivantes sont réglées automatiquement.

**10.** Dispositif de conversion de puissance, comprenant :

une unité de calcul de détection de vitesse (5) qui délivre en sortie une valeur d'estimation de vitesse (car ou une valeur de détection de vitesse ($\omega_{rd}$) d'un moteur à induction (1) ;

une unité de calcul de fréquence de glissement (6) qui délivre en sortie une valeur d'instruction de fréquence de glissement du moteur à induction ;

une unité de calcul de correction de fréquence (8) qui calcule une valeur de correction de fréquence ($\Delta\omega$) de telle sorte qu'une valeur d'estimation de flux magnétique secondaire d'axe q ($\Phi_{2q}{}^{\wedge}$) calculée à partir de la valeur d'estimation de vitesse ($\omega_r{}^{\wedge}$) ou d'une valeur de détection de vitesse ($\omega_{rd}$) et d'une valeur de correction de tension d'axe d ($\Delta V_d{}^*$) pour une commande de courant coïncide avec ou s'approche d'une valeur d'instruction de flux magnétique secondaire d'axe q ($\Phi_{2q}{}^*$) ;

le moteur à induction (1) génère un couple par l'intermédiaire du flux magnétique généré par le courant de l'axe d qui est la composante d'axe de flux magnétique et du courant de l'axe q qui est l'axe de couple ;

une unité de calcul de commande de vitesse qui délivre en sortie une valeur d'instruction de courant d'axe ($I_q{}^*$) en tant que valeur d'instruction de sorte que la valeur estimée de vitesse ($\omega_r{}^{\wedge}$) ou la valeur détectée de vitesse ($\omega_{rd}$) approche la valeur d'instruction de vitesse ; et

une unité de commande (7,9) qui commande une valeur de fréquence de sortie ($\omega_1{}^*$, $\omega_1{}^{**}$) du dispositif de conversion de puissance sur la base de la valeur d'estimation de vitesse ou de la valeur de détection de vitesse, de la valeur d'instruction de fréquence de glissement du moteur à induction, de la valeur d'instruction de courant d'axe q et de la valeur de correction de fréquence.

11. Dispositif de conversion de puissance selon la revendication 10, incluant un convertisseur de puissance qui inclut un élément de commutation, l'élément de commutation étant commandé selon : une valeur de détection de courant d'axe d (une composante de flux magnétique) et une valeur de détection de courant d'axe q (une composante de couple) du moteur à induction ; une valeur de fréquence de sortie du dispositif de conversion de puissance ; une valeur de référence de tension sur la base d'une constante électrique du moteur à induction et de valeurs d'instruction de courant d'axe d et d'axe q ; une valeur de tension de correction pour une commande de courant pour commander les valeurs de détection de courant d'axe d et d'axe q selon les valeurs d'instruction de courant d'axe d et d'axe q ; des valeurs d'instruction de tension d'axe d et d'axe q calculées à partir de la valeur de référence de tension et de la valeur de tension de correction pour une commande de courant ; une valeur d'estimation de phase obtenue en intégrant la valeur de fréquence de sortie du dispositif de conversion de puissance ; une valeur d'instruction de tension alternative triphasée calculée à partir des valeurs d'instruction de tension d'axe d et d'axe q ; et une valeur d'instruction de tension alternative triphasée.

F I G. 1

F I G . 2

F I G. 3

F I G. 4

F I G. 5

% 0

−100 ............................................ A POINT

−200 .............................. LOAD TORQUE T$_L$

20

SPEED COMMAND VALUE $\omega_r$*

% 10 ............................................... $\triangle\omega_r$

ACTUAL SPEED VALUE $\omega_r$

0

1

wb d−AXIS SECONDARY MAGNETIC FLUX VALUE $\Phi_{2d}$

0.5 q−AXIS SECONDARY MAGNETIC FLUX VALUE $\Phi_{2q}$

0

TIME(s)

F I G. 6

F I G. 7

F I G. 8

F I G . 1 0

8'

8a

ΔV$_d$* → 

$\hat{\omega_r}$ →

q-AXIS
SECONDARY
MAGNETIC FLUX
CALCULATION UNIT

$\hat{\Phi_{2q}}$

8c

−

+

$\hat{\Delta\Phi_{2q}}$

8d

CORRECTION
FREQUENCY
CALCULATION UNIT

→ Δω

8e

0 ⌐ 1

8b'

$\Phi_{2q}$*

I$_q$* →

27

F I G. 1 1

F I G. 1 2

F I G. 1 3

EP 3 267 577 B1

F I G . 1 5

EP 3 267 577 B1

F I G . 1 6

EP 3 267 577 B1

**EP 3 267 577 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8317698 A

- EP 2173027 A2

**Non-patent literature cited in the description**

- Sensorless Vector Control with Quick Response for General Purpose Inventors. **ISHIDA S et al.** POWER CONVERSION CONFERENCE, 1993. YOKOHAMA 1993., CONFERENCE RECORD OF THE YOKOHAMA, JAPAN. IEEE, 19 April 1993, 467-472